# EUROPEAN PATENT APPLICATION

(11) **EP 1 785 026 A2**
(43) Date of publication of application: **16.05.2007**
(21) Application number: 06123768.1
(22) Date of filing: 09.11.2006
(51) Int. Cl.: A01D 34/90, A01G 3/08

(54) **Vegetation trimmer**

(30) Priority: 09.11.2005 GB 0522806
(71) Applicant: ROBERT BOSCH GMBH, 70469 Stuttgart (DE)
(72) Inventor: Cater, Roy J, Kent ME20 7AZ (GB)
(74) Representative: Bailey, David Martin

(57) **Abstract**

The present invention relates to a vegetation trimmer, in particular a trimmer having a guide or protector to help draw unwanted vegetation into a cutting path of the trimmer whilst protecting prized plant specimens. We describe a vegetation trimmer comprising a working head having a housing comprising a rotatable elongate cutting element, defining a cutting zone; a handle; and a shaft intermediate said working head and handle; wherein the housing further comprises a vegetation guide to direct, in use, vegetation to within the cutting zone.

## Description

The present invention relates to a vegetation trimmer. In particular, it relates to a trimmer having a guide or protector to help draw unwanted vegetation into a cutting path of the trimmer whilst protecting prized plant specimens.

A trimmer is an implement, typically used in a garden, for cutting vegetation, usually grass or weeds. Such trimmers are not suitable for cutting and trimming tree branches. Typically, a trimmer comprises a rotatable cutting head mounted at one end of a shaft, with a handle at the other end of the shaft. The cutting head includes a cutting element, typically in the form of a resilient plastics wire or line fed from a spool; or a substantially rigid plastics cutter element. The cutting head is caused to rotate by means of an electric motor or a small petrol engine.

Trimmers are particularly useful for cutting grass and vegetation around obstacles which prevent access to a conventional lawn mower. However, such trimmers are not particularly effective for cutting vegetation lying in close proximity to a wall, fence, tree or other such structures found in garden environments, as the cutting element, rotating at high speed, tends to deteriorate rapidly upon contact with such surfaces. This results in an unacceptable waste of significant amounts of cutting line or unnecessary blunting of the cutting element, which requires more frequent replacement of the cutting line reservoir or cutting element.

Additionally, an unguarded cutting element is unselective in terms of what it chooses to cut and delicate items such as valued plants, paintwork and even some tree barks adjacent or intermingled with unwanted vegetation can be cut or damaged when such trimmers are used.

Furthermore, trimmers which utilise a resilient plastics wire or rigid plastics cutting element also suffer the disadvantage that they are unsuitable for cutting thick fibrous vegetation.

Accordingly, the present invention seeks to overcome at least some of these problems and provide a trimmer in which unwanted vegetation can be selectively cut in the presence of obstacles and/or delicate items. It is desired that such a trimmer will further comprise means for cutting thick fibrous vegetation.

In accordance with the present invention, there is provided a vegetation trimmer comprising a working head having a housing comprising a rotatable elongate cutting element, defining a cutting zone; a handle; and a shaft intermediate said working head and handle; wherein the housing further comprises a vegetation guide to guide, in use, vegetation to within the cutting zone.

Preferably, the vegetation guide comprises at least one finger which, with the housing, defines a channel within which vegetation to be cut is guidable.

Preferably, the cutting zone has a limit lying radially within the housing. Preferably, the channel defined by the vegetation guide and housing traverses the cutting zone.

Suitably, an inner edge of the vegetation guide comprises a cutting edge.

Preferably, the elongate cutting element comprises a rigid plastics cutter or a resilient plastics wire.

Suitably, the trimmer further comprises a channel guard moveable between a first position, in which the channel is open, to a second position, in which the channel is closed. Preferably, the channel guard is pivotally mounted on the working head. Alternatively, the channel guard is slidably mounted on the working head. In further alternative embodiments, the channel guard is demountable.

Preferably, the housing further comprises a cut-restriction guard rotatable relative to the housing to restrict the extent of the cutting zone. Preferably, the cut-restriction guard is rotatable to confine the extent of the cutting zone to the channel. Optionally, the cut-restriction guard is rotatable to prevent entry of vegetation to the channel.

Optionally, the housing further comprises a secondary cutter. Preferably, the secondary cutter comprises a rotatable disc. Preferably, at least a portion of the cut-path of the secondary cutter traverses a channel formed between the housing and vegetation guide. More preferably, the cut-path of the secondary cutter traverses the channel in a region where the housing and vegetation guide join. Preferably, the secondary cutter is axially mounted on an independent axis. Alternatively, the secondary cutter is co-axially mounted with the cutting element.

Preferably, the secondary cutter comprises teeth. Suitably, the teeth are arranged circumferentially.

Alternatively, the secondary cutter comprises a reciprocating scissor cutter.

Preferably, the vegetation guide extends in a direction which opposes the direction of rotation of the cutting element such that, in use and upon rotation of the cutting element, grass is drawn into the channel defined by the vegetation guide and housing, and towards the secondary cutter.

Optionally, the handle and shaft are formed integrally or as a unitary component.

The above and other aspects of the present invention will now be illustrated in further detail, by way of example only, with reference to the accompanying drawings in which:
- Figure 1: is an above plan schematic view of a first embodiment of a trimmer in accordance with the present invention;
- Figure 2: is a front perspective schematic view of the trimmer of Figure 1;
- Figure 3: is an above plan schematic view of a second embodiment of a trimmer in accordance with the present invention;
- Figure 4: is a front perspective schematic view of the trimmer of Figure 3;
- Figure 5: is an above plan schematic view of a third embodiment of a trimmer in accordance with the present invention;
- Figure 6: is a front perspective schematic view of the trimmer of Figure 5;
- Figure 7: is an above plan schematic view of the embodiment of Figure 5 with a rotatable guard in an open position; and
- Figure 8: is an above plan schematic view of the embodiment of Figure 5 with a rotatable guard in a closed position.

A trimmer in accordance with the present invention typically includes other features commonly found on trimmers of this type, such as a handle connected to a shaft and having a working head which includes a rotatable cutting element, drivable by a motor, and a user guard. A trimmer according to the invention does not include apparatus for cutting and trimming tree branches, such as tree loppers.

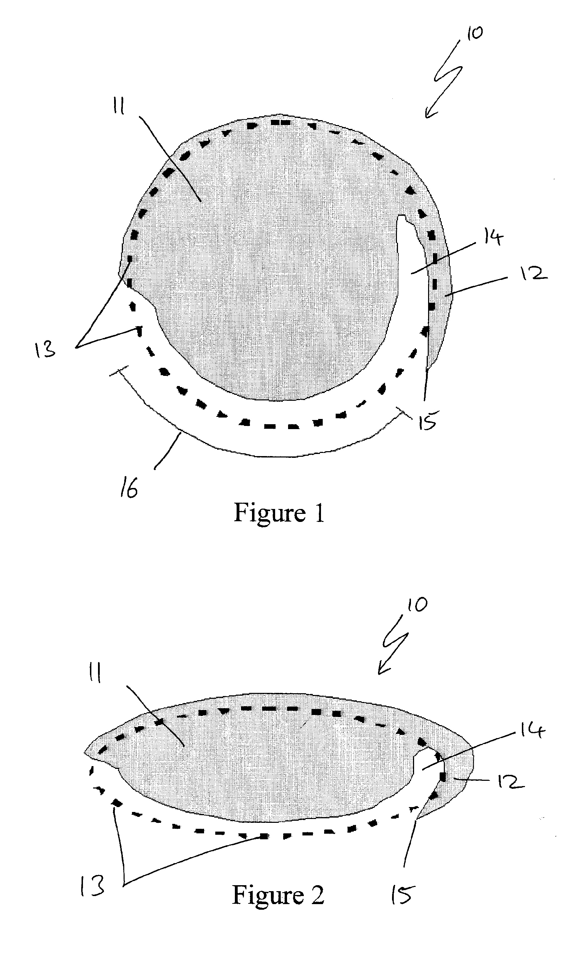

Referring to Figures 1 and 2, there is shown, in schematic form, a working head 10 of a conventional trimmer (for clarity, conventional features are not illustrated). The working head 10 comprises a housing 11 for a motor driving an elongate cutting element, in the form of a resilient plastics wire or line fed from a spool. Working head 10 further comprises a cowl around the cutter head to reduce distribution of grass cuttings away from the head 10 and protect the user's feet from the cutter head. Additionally formed with the conventional working head 10 is a vegetation guide in the form of a finger 12 for catching and directing stray/impeded vegetation to within a cutting zone 13 (represented by the dotted line) defined by the cutting element. Finger 12 forms a channel 14 with the housing 11 of the working head, and the channel traverses the cutting zone 13, so that vegetation engaged by the finger apex 15 is brought within the cutting zone 13. It is desirable, but not essential, that the inner channel-forming surface of finger 12 is provided with a cutting edge in the manner of a scythe or sickle.

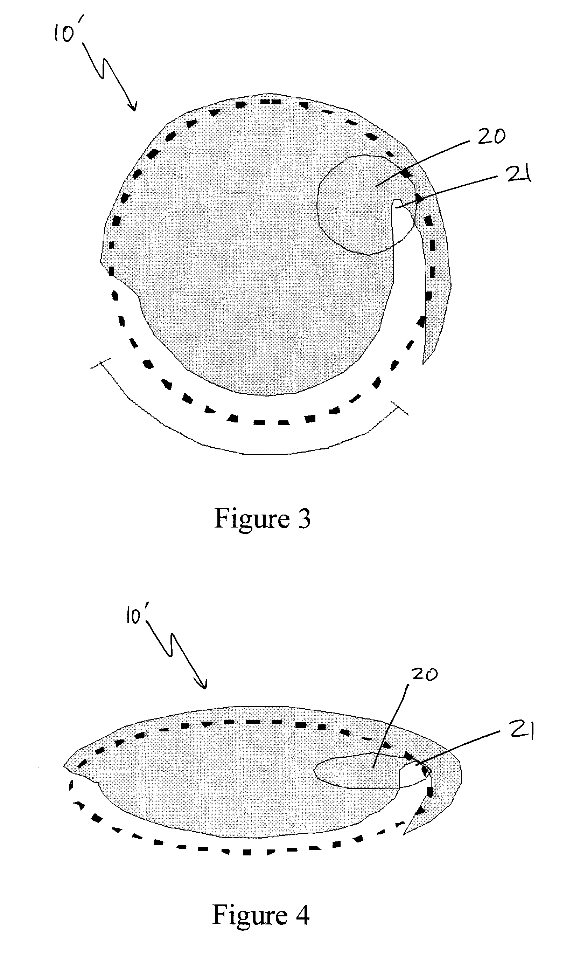

Figures 3 and 4 schematically illustrate a second embodiment of a trimmer working head as described above. The working head further comprises a secondary cutter 20 in the form of a rotatable disc, located towards the channel base 21. The secondary cutter 20 is preferably formed from a sharpened rigid plastics or metal disc, and may be serrated in an analogous fashion to a circular saw. In alternative embodiments (not shown) the secondary cutter comprises rotatable blades or a scissor cutter.

The periphery of the cutter 20 defines a second cutting zone, and at least a portion of said second cutting zone traverses the channel base 21. The preferred positioning of the secondary cutter 20 is at or just within the cutting zone 13 of the cutting element, such that wear of the cutting element is minimised. Secondary cutter 20 is mounted on rotatable shaft (not shown) which rotates on an axis independent from that of the cutting element of the working head, and is driven by a belt pulley system (not shown). The belt pulley system is preferably linked to the main motor drive, which drives the cutting element. In alternative embodiments (not shown) the secondary cutter is driven by a separate, dedicated motor. In further alternative embodiments the secondary cutter is gear driven.

In use, the trimmer is rotated so that the finger apex 15 separates and gathers vegetation to be cut, and guides such vegetation along the inner surface of the finger and into channel 14. At the same time, the outer surface of the finger 12 prevents any nearby surface or plant from falling within the cutting zone. Generally, any vegetation entering the cutting zone 13 will be cut by the cutting element. However, if the vegetation comprises tough fibrous vegetation, the cutting element will not normally be strong enough to cut through it. In such a situation, the continued rotation and/or forward motion of the trimmer will draw the vegetation along the channel 14 and towards the channel base 21, where it will be cut by secondary cutter 20 (Figures 3 & 4). This arrangement ensures that plants and so-called delicate items will be protected and unscathed, whilst unwanted vegetation will be cut as desired. In preferred embodiments the direction in which the finger 12 extends will oppose the direction of rotation of the cutting element, such that upon rotation of the cutting element, grass is drawn into the channel 14 defined by the finger 12 and housing 11, and towards the secondary cutter 20. In this arrangement an inwardly-directing force generated by the rotation of the cutting element will serve to urge thicker more fibrous vegetation which has entered channel 14 towards the secondary cutter 20.

In further preferred embodiments a switch or clutch is provided for temporarily removing power to the primary cutting element to allow tough fibrous vegetation to be handled solely by the secondary cutter, thereby reducing wastage or blunting of the cutting element.

It will also be recognised that a second vegetation guide or finger may also be provided. In Figures 1 to 4, finger 12 extends in a clockwise manner from housing 11. It is preferable, but not essential that, when trimmers include a second finger, the second finger will extend in an opposite, anti-clockwise, manner from housing 11. In addition, in such arrangements it will be desirable to provide an additional secondary cutter, however, a device in which a single secondary cutter traverses the channels formed by both fingers is also envisaged.

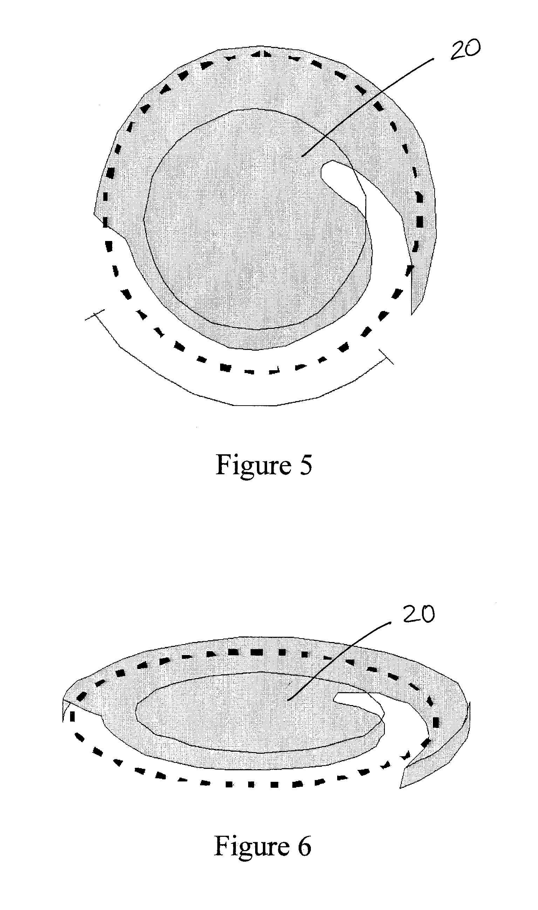

In a further alternative embodiment, illustrated in Figures 5 and 6, the secondary cutter is coaxially rotatable with the cutting element.

Stalls or overloads of the secondary cutter drive mechanism are avoided because the size of the channel 14 is carefully chosen so as to reject items that are too large for the cutting capacity of the trimmer. Additionally, the direction of rotation of the secondary cutter can be chosen so as to throw cut material out of the slot, and the secondary cutter may be positioned above or below the cutting element.

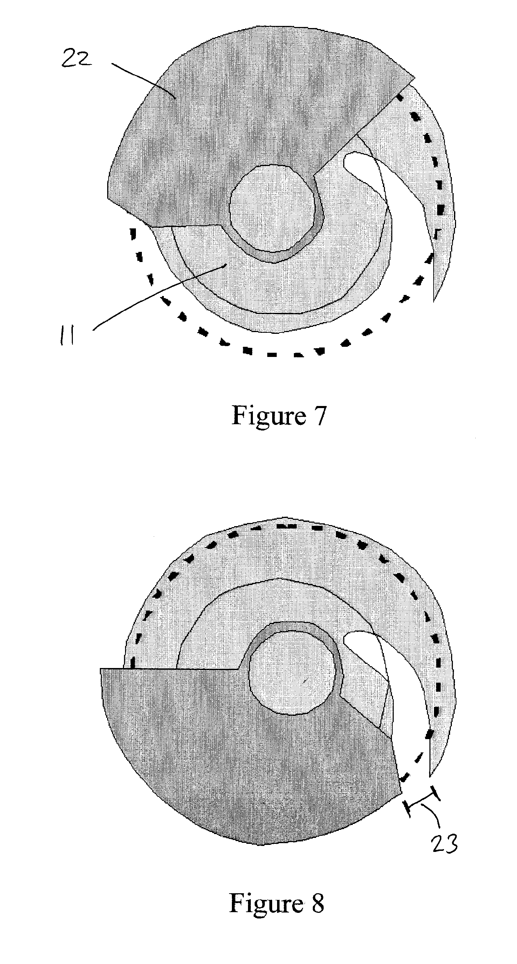

Additionally, in the embodiments of Figures 7 and 8, a rotatable guard 22 is formed with housing 11. In this arrangement the trimmer can be converted into a very accurate trimming device since the extent of the exposed cut-path 16 can be reduced to limit the cutting zone to a region defined by a channel mouth 23 (Figure 8). Use of the trimmer in a configuration in which the exposed cut-path 23 has been reduced, reduces the likelihood of a user accidentally damaging delicate items and plants. This feature is especially useful when working in confined areas such as when trimming along a fence or within a crowded flowerbed, and provides the user with a more accurate trimming tool.

Furthermore, and if required, the guard can also be rotated to close channel 14 when the trimmer is being used for conventional trimming. Alternatively, a separate guard may be provided to prevent vegetation from entering the channel.

## Claims

1. A vegetation trimmer comprising a working head having a housing comprising a rotatable elongate cutting element, defining a cutting zone; a handle; and a shaft intermediate said working head and handle; wherein the housing further comprises a vegetation guide to guide, in use, vegetation to within the cutting zone.

2. A vegetation trimmer as claimed in Claim 1 in which the vegetation guide comprises at least one finger which, with the housing, defines a channel within which vegetation to be cut is guidable.

3. A vegetation trimmer as claimed in Claim 2 in which the channel defined by the vegetation guide and housing traverses the cutting zone.

4. A vegetation trimmer as claimed in any one of claims 1 to 3 in which the elongate cutting element comprises a rigid plastics cutter or a resilient plastics wire.

5. A vegetation trimmer as claimed in any one of claims 1 to 4 in which an inner edge of the vegetation guide comprises a cutting edge.

6. A vegetation trimmer as claimed in any one of claims 1 to 5 in which the cutting zone has a limit lying radially within the housing.

7. A vegetation trimmer as claimed in any one of claims 2 to 6 further comprising a channel guard moveable between a first position, in which the channel is open, and a second position, in which the channel is closed.

8. A vegetation trimmer as claimed in Claim 7 in which the channel guard is pivotally mounted on the working head.

9. A vegetation trimmer as claimed in Claim 7 in which the channel guard is slidably mounted on the working head.

10. A vegetation trimmer as claimed in Claim 7 in which the channel guard is demountable.

11. A vegetation trimmer as claimed in any one of claims 2 to 10 in which the housing further comprises a cut-restriction guard, rotatable relative to the housing to restrict the extent of the cutting zone.

12. A vegetation trimmer as claimed in Claim 11 in which the cut-restriction guard is rotatable to confine the extent of the cutting zone to the channel.

13. A vegetation trimmer as claimed in Claim 11 in which the cut-restriction guard is rotatable to prevent entry of vegetation into the channel.

14. A vegetation trimmer as claimed in any one of the preceding claims in which the housing further comprises a secondary cutter.

15. A vegetation trimmer as claimed in Claim 14 in which the secondary cutter comprises a rotatable disc.

16. A vegetation trimmer as claimed in Claim 14 in which the secondary cutter comprises a reciprocating scissor cutter.

17. A vegetation trimmer as claimed in any one of claims 14 to 16 in which at least a portion of the cut-path of the secondary cutter traverses a channel formed between the housing and vegetation guide.

18. A vegetation trimmer as claimed in Claim 17 in which the cut-path of the secondary cutter traverses the channel in a region where the housing and vegetation guide join.

19. A vegetation trimmer as claimed in any one of claims 14 to 18 in which the secondary cutter is axially mounted on an independent axis.

20. A vegetation trimmer as claimed in any one of claims 14 to 19 in which the secondary cutter is co-axially mounted with the cutting element.

21. A vegetation trimmer as claimed in any one of claims 14 to 20 in which the secondary cutter comprises teeth.

22. A vegetation trimmer as claimed in any one of the preceding claims in which the vegetation guide extends in a direction which opposes the direction of rotation of the cutting element such that, in use and upon rotation of the cutting element, grass is drawn into the channel defined by the vegetation guide and housing, and towards the secondary cutter.

23. A vegetation trimmer as claimed in any one of the preceding claims in which the handle and shaft intermediate said working head and handle are integral.
